# FASCICULE DE BREVET EUROPEEN

(11) **EP 1 633 198 B1**
(45) Date de publication et mention de la délivrance du brevet: **03.01.2007**
(21) Numéro de dépôt: 04767280.3
(22) Date de dépôt: 08.06.2004
(51) Int. Cl.: A22C 13/00

(54) **ENVELOPPE EN BOYAUX NATURELS SECHES ET PROCEDE DE FABRICATION**
HÜLLE AUS NATÜRLICHEN GETROCKNETEN HÄUTEN UND VERFAHREN ZU IHRER HERSTELLUNG
ENVELOPE MADE FROM NATURAL DRIED SKINS AND METHOD FOR PRODUCTION THEROF

(30) Priorité: 11.06.2003 FR 0307011
(43) Date de publication de la demande: 15.03.2006
(73) Titulaire: BOA Participations, 38200 Vienne (FR)
(72) Inventeur: BILLON-LANFREY, Christian, 90000 Tanger (MA); MATHET, Luc, 90000 Tanger (MA)
(74) Mandataire: Maureau, Philippe
(86) Numéro de dépôt international: PCT/FR2004/001414
(87) Numéro de publication internationale: WO 2004/110156

(56) Documents cités:
- EP-A- 0 517 630
- US-A- 2 042 644
- US-A- 2 096 221
- US-A- 2 575 467

## Description

La présente invention concerne une enveloppe en boyaux naturels séchés pour une utilisation en salaisonnerie artisanale et industrielle ainsi que son procédé de fabrication.

En salaisonnerie, les enveloppes des produits doivent de préférence avoir un calibre, ou diamètre, une épaisseur, une longueur et une solidité constants. Si les boyaux artificiels présentent souvent de telles caractéristiques, il est plus difficile d'obtenir des enveloppes à base de boyaux naturels vérifiant ces critères. Or, il est important de pouvoir disposer d'enveloppes en boyaux naturels pour certains produits particuliers comme les produits bénéficiant d'une appellation contrôlée par exemple.

Un des problèmes rencontrés dans la fabrication d'enveloppes à partir de boyaux naturels est dû à la grande disparité des tronçons de boyaux naturels utilisables, en ce qui concerne leur diamètre, leur qualité et leur longueur respectifs.

Dans le cas où l'on dispose de tronçons de boyaux ou diamètre et de qualité déterminés mais de longueur quelconque, une solution est d'enfiler les tronçons de boyaux sur un support de forme adaptée, les uns à la suite des autres, avec chevauchement de leurs extrémités respectives, puis de laisser sécher, et démouler l'enveloppe obtenue. Toutefois, une telle solution ne donne pas entièrement satisfaction. En effet, dans le cas où le diamètre des tronçons de boyaux avant séchage est supérieur à celui du support, il y a un risque de reprise de diamètre, au moment de la réhydratation de l'enveloppe séchée, supérieure au diamètre souhaité. Il faut alors utiliser des additifs hydrofuges pour éviter cette reprise de diamètre.

Une autre solution est de faire sécher chaque tronçon de boyaux naturels sur un support adapté puis de le découper pour obtenir une feuille. On assemble ensuite ces feuilles par couture pour reconstituer une enveloppe de diamètre et de longueur souhaités. Cette solution ne donne pas entièrement satisfaction, en particulier du fait de la présence du fil de couture. En effet, la résistance de l'enveloppe est fragilisée dans les zones de couture. Par ailleurs, pour des raisons de coût, le fil de couture en coton est généralement préféré au fil de couture en boyaux naturels, et le produit ne peut alors plus bénéficier d'une appellation contrôlée.

Pour éviter l'utilisation d'un fil de couture, il a également été proposé de refendre des tronçons de boyaux naturels dans leur longueur pour obtenir des bandes et de déposer ces bandes sur un support de forme adaptée avec chevauchement des bandes entre elles. Après séchage, on démoule l'enveloppe obtenue. Toutefois, les enveloppes ainsi obtenues présentent une instabilité de diamètre lors de leur réhydratation. Par ailleurs, il est souvent nécessaire d'utiliser des adhésifs, comme du collagène, pour réaliser les assemblages de bandes à déposer sur le support.

La présente invention vise à remédier aux problèmes ci-dessus en proposant une enveloppe en boyaux naturels séchés constituée de bandes de boyaux naturels de diamètre, qualité et longueur respectifs quelconques, préalablement refendus longitudinalement, ces bandes étant agencées de telle sorte que l'enveloppe obtenue présente des caractéristiques similaires à celles des boyaux artificiels, à savoir un diamètre, une qualité et une longueur constants.

La présente invention a pour objet une enveloppe en boyaux naturels séchés, pour une utilisation en salaisonnerie, constituée de bandes de boyaux naturels de diamètre, qualité et longueur respectifs quelconques, préalablement refendus longitudinalement pour former lesdites bandes, caractérisée en ce qu'elle comprend :
- une couche interne constituée d'un enroulement en spirale d'une ou de plusieurs premières bandes les unes à la suite des autres, ces premières bandes se chevauchant en partie sur elles-mêmes sur leur longueur et entre elles à leurs extrémités respectives, et
- une couche externe, collée à la couche interne, constituée de deuxièmes bandes disposées longitudinalement sur la couche interne, ces deuxièmes bandes se chevauchant en partie entre elles sur leur longueur et leurs extrémités respectives.

L'enveloppe selon l'invention présente des caractéristiques similaires à celles des boyaux artificiels utilisés en salaisonnerie. Ainsi, elle présente une qualité, et en particulier une solidité et une porosité, une longueur et un diamètre constants. Après réhydratation, elle peut être utilisé en salaisonnerie comme un boyau frais. L'assemblage spécifique des bandes de boyaux au sein de l'enveloppe, à savoir selon une première couche de bandes enroulées en spirale et une deuxième couche de bandes longitudinales, assure la stabilité en diamètre de l'enveloppe lors de sa réhydratation.

Dans une forme préférée de réalisation de l'invention, les deuxièmes bandes se chevauchent entre elles à la façon d'écailles, l'extrémité arrière d'une dite deuxième bande recouvrant l'extrémité avant d'une dite deuxième bande précédente. Une telle enveloppe dont les deuxièmes bandes se chevauchent à la façon d'écailles est particulièrement intéressante pour une utilisation en salaisonnerie industrielle. En effet, le passage de l'enveloppe dans des systèmes de freinage de « main automatique » de poussoirs et dans les machines de « clippage » utilisés en salaisonnerie industrielle est facilité par le chevauchement en écailles des bandes de la couche externe, les machines passant naturellement du contact d'une bande à l'autre sans prendre ces bandes à rebrousse-poil.

La présente invention a également pour objet un procédé de fabrication d'une enveloppe en boyaux naturels séchés telle que décrite ci-dessus, caractérisé en ce qu'il comprend les étapes suivantes :
a) on prépare des bandes de boyaux naturels à partir de tronçons de boyaux naturels frais ou dessalés hydratés, de diamètre, qualité et longueur respectifs quelconques, qu'on refend longitudinalement,
b) on dispose, sur un support approprié, une première couche d'une ou plusieurs premières bandes en enroulant ces bandes en spirale sur le support les unes à la suite des autres, de telle sorte que ces premières bandes se chevauchent en partie sur elles-mêmes sur leur longueur et entre elles à leurs extrémités respectives,
c) on dispose, sur cette première couche, une deuxième couche, de deuxièmes bandes, en posant ces deuxièmes bandes longitudinalement sur la première couche, de telle sorte que ces deuxièmes bandes se chevauchent en partie entre elles sur leur longueur et leurs extrémités respectives,
d) on laisse sécher les deux couches sur le support,
e) on retire l'enveloppe obtenue du support.

Avantageusement, on pose les deuxièmes bandes de telle sorte qu'elles se chevauchent à la façon d'écailles, l'extrémité arrière d'une dite deuxième bande recouvrant l'extrémité avant d'une dite deuxième bande précédente.

Grâce au procédé selon l'invention, il est possible de fabriquer une enveloppe en boyaux naturels séchés présentant des caractéristiques similaires à celles des boyaux artificiels, à savoir un diamètre, une qualité et une longueur constants, à partir de boyaux naturels initiaux présentant des diamètres, des qualités et des longueurs différents. Ainsi, il est possible d'utiliser des tronçons de boyaux de courte longueur, de qualité faible et de tout diamètre pour fabriquer une enveloppe séchée qui présentera une qualité, une longueur et un diamètre constants.

En effet, dans l'enveloppe selon l'invention, la superposition des deux couches spécifiques, interne et externe, supprime les problèmes de porosité et de solidité. De plus, selon le procédé de l'invention, les bandes de boyaux sont disposées sur le support à l'état hydraté et le séchage de ces bandes, en place sur le support, permet d'obtenir un collage des bandes entre elles sans adhésif ni additif. Ce séchage permet également d'obtenir le collage de la couche externe sur la couche interne sans adhésif ni additif.

L'invention sera mieux comprise à l'aide du dessin annexé dans lequel :
- les figures 1 et 2 montrent l'étape de préparation de la couche interne de l'enveloppe selon l'invention,
- les figures 3 à 5 montrent l'étape de réalisation de la couche externe de l'enveloppe selon l'invention, les bandes de la couche externe se chevauchant à la façon d'écailles.

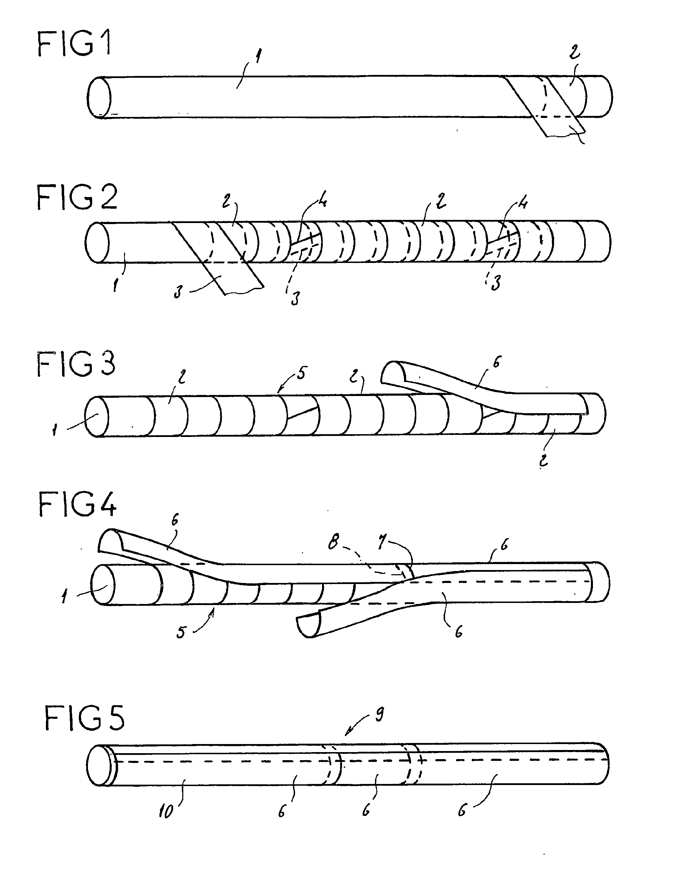

Sur la figure 1 est représenté un support 1 sur lequel est enroulée en spirale une première bande 2, cette bande se chevauchant en partie sur elle-même sur sa longueur. Cette bande a été obtenue à partir d'un tronçon de boyaux naturels frais ou dessalés que l'on a refendu longitudinalement. Cette bande 2 est enroulée sur le support 1 à l'état hydraté. Cette bande 2 présente une extrémité avant 3.

La figure 2 montre le support 1 de la figure 1 sur lequel deux autres bandes 2 ont été enroulées, à la suite de la première. L'extrémité arrière 4 de chaque bande 2 recouvre l'extrémité avant 3 de la bande 2 précédente de telle sorte que les extrémités respectives des bandes 2 se chevauchent. Ces différentes bandes 2 peuvent être de largeur, de qualité ou de longueur différentes.

Sur la figure 3 est représentée une couche interne 5 entièrement réalisée. Cette couche interne 5 est constituée de trois premières bandes 2 enroulées en spirale sur le support 1 les unes à la suite des autres. Une bande 6 est en cours d'installation, selon une disposition longitudinale, sur la couche interne 5. Cette bande 6 a été obtenue à partir de tronçons de boyaux naturels frais ou dessalés de la même manière que les bandes 2.

Sur la figure 4 est montrée l'installation, en disposition longitudinale, de deux autres bandes 6, sur la couche interne 5, de telle manière que ces bandes 6 se chevauchent en partie entre elles sur leur longueur et à leurs extrémités respectives. Ainsi, l'extrémité arrière 7 d'une bande 6 recouvre l'extrémité avant 8 de la bande 6 précédente. Les différentes bandes 6 se chevauchent ainsi à la façon d'écailles. Les différentes bandes 6 peuvent être de largeur, de qualité ou de longueur différentes.

La figure 5 représente une enveloppe 9 selon l'invention sur un support 1. La couche externe 10 est entièrement réalisée de bandes 6 disposées longitudinalement sur la couche interne de telle sorte que ces bandes 6 recouvrent entièrement la couche interne de l'enveloppe.

Après séchage sur le support, il suffit de démouler l'enveloppe obtenue pour disposer d'une enveloppe en boyaux naturels séchés prête à l'emploi. Ainsi, après réhydratation, cette enveloppe peut être utilisée comme un boyau frais en salaisonnerie. Cette enveloppe présente des caractéristiques similaires à celles des boyaux artificiels. En particulier, l'enveloppe selon l'invention présente un diamètre, une qualité et une longueur constants. L'assemblage spécifique des bandes de boyaux au sein de l'enveloppe, à savoir selon une première couche de bandes enroulées en spirale et une deuxième couche de bandes longitudinales, assure la stabilité en diamètre de l'enveloppe lors de sa réhydratation.

## Revendications

1. Enveloppe (9) en boyaux naturels séchés, pour une utilisation en salaisonnerie, constituée de bandes (2, 6) de boyaux naturels de diamètre, qualité et longueur respectifs quelconques, préalablement refendus longitudinalement pour former lesdites bandes,
**caractérisée en ce qu'**elle comprend :
- une couche interne (5) constituée d'un enroulement en spirale d'une ou de plusieurs premières bandes (2) les unes à la suite des autres, ces premières bandes (2) se chevauchant en partie sur elles-mêmes sur leur longueur et entre elles à leurs extrémités respectives, et
- une couche externe (10), collée à la couche interne (5), constituée de deuxièmes bandes (6) disposées longitudinalement sur la couche interne, ces deuxièmes bandes se chevauchant en partie entre elles sur leur longueur et leurs extrémités respectives.

2. Enveloppe selon la revendication 1, **caractérisée en ce que** les deuxièmes bandes (6) se chevauchent entre elles à la façon d'écailles, l'extrémité arrière (7) d'une dite deuxième bande recouvrant l'extrémité avant (8) d'une dite deuxième bande précédente.

3. Procédé de fabrication d'une enveloppe (9) en boyaux naturels séchés selon la revendication 1 ou 2, **caractérisé en ce qu'**il comprend les étapes suivantes :
a) on prépare des bandes (2, 6) de boyaux naturels à partir de tronçons de boyaux naturels frais ou dessalés hydratés, de diamètre, qualité et longueur respectifs quelconques, qu'on refend longitudinalement,
b) on dispose, sur un support (1) approprié, une première couche (5) d'une ou plusieurs premières bandes (2) en enroulant ces bandes en spirale sur le support (1) les unes à la suite des autres, de telle sorte que ces premières bandes (2) se chevauchent en partie sur elles-mêmes sur leur longueur et entre elles à leurs extrémités respectives,
c) on dispose, sur cette première couche (5), une deuxième couche (10), de deuxièmes bandes (6), en posant ces deuxièmes bandes (6) longitudinalement sur la première couche (5), de telle sorte que ces deuxièmes bandes (6) se chevauchent en partie entre elles sur leur longueur et leurs extrémités respectives,
d) on laisse sécher les deux couches (5, 10) sur le support (1),
e) on retire l'enveloppe (9) obtenue du support (1).

4. Procédé selon la revendication 3, **caractérisé en ce qu'**on pose les deuxièmes bandes (6) de telle sorte qu'elles se chevauchent à la façon d'écailles, l'extrémité arrière (7) d'une dite deuxième bande recouvrant l'extrémité avant (8) d'une dite deuxième bande précédente.

## Claims

1. Wrapper (9) made of dried natural intestines, for use in the salting industry, said wrapper being made up of strips (2, 6) of natural intestines which are of any respective diameter, quality and length and have been split longitudinally beforehand so as to form the said strips,
**characterised in that** it comprises:
- an inner layer (5) made up of a spiral winding of one or more first strips (2) one after another, the said first strips (2) partially overlapping with themselves over their length and with one another at their respective ends, and
- an outer layer (10), which is stuck to the inner layer (5) and is made up of second strips (6) disposed longitudinally over said inner layer, the said second strips partially overlapping with one another over their length and their respective ends.

2. Wrapper according to claim 1, **characterised in that** the second strips (6) overlap with one another after the fashion of scales, the rear end (7) of a said second strip covering the front end (8) of a said preceding second strip.

3. Method of manufacturing a wrapper (9) made of dried natural intestines according to claim 1 or 2, **characterised in that** it comprises the following stages:
a) strips (2, 6) of natural intestines are prepared from lengths of fresh or hydrated, desalinated natural intestines which are of any respective diameter, quality and length and which are split longitudinally;
b) a first layer (5) of one or more first strips (2) is disposed on a suitable support (1) by winding the said strips in a spiral on said support (1) one after the other, in such a way that the said first strips (2) partially overlap with themselves over their length and with one another at their respective ends;
c) a second layer (10) of second strips (6) is disposed over the said first layer (5) by laying the said second strips (6) longitudinally over the first layer (5), in such a way that the said second strips (6) partially overlap with one another over their length and their respective ends;
d) the two layers (5, 10) are allowed to dry on the support (1); and
e) the wrapper (9) obtained is withdrawn from the support (1).

4. Method according to claim 3, **characterised in that** the second strips (6) are laid in such a way that they overlap after the fashion of scales, the rear end (7) of a said second strip covering the front end (8) of a said preceding second strip.

## Patentansprüche

1. Hülle (9) aus getrockneten natürlichen Häuten bzw. Därmen zur Verwendung für eingesalzene Lebensmittel, wobei die Hülle durch Bänder (2, 6) aus natürlichen Häuten mit irgendeinem Durchmesser, irgendeiner Qualität und irgendeiner Länge gebildet ist, die zuvor in Längsrichtung gespalten wurden, um die Bänder herzustellen, **dadurch gekennzeichnet, dass** die Hülle aufweist:
- eine innere Schicht (5), die aus einer spiralförmigen Wicklung eines oder mehrerer aufeinanderfolgender erster Bänder (2) gebildet ist, wobei die ersten Bänder (2) auf ihrer Länge sich teilweise selbst überlappen und an ihren jeweiligen Enden einander gegenseitig überlappen; und
- eine äussere Schicht (10), die an die innere Schicht (5) geklebt ist und aus zweiten Bändern (6) gebildet ist, die auf der inneren Schicht in Längsrichtung angeordnet sind, wobei die zweiten Bänder auf ihrer Länge und an ihren jeweiligen Enden einander teilweise gegenseitig überlappen.

2. Hülle nach Anspruch 1, **dadurch gekennzeichnet, dass** die zweiten Bänder (6) einander schuppenartig überlappen, wobei das hintere Ende (7) eines zweiten Bandes das vordere Ende (8) eines vorherigen zweiten Bandes teilweise überdeckt.

3. Verfahren zum Herstellen einer Hülle (9) aus getrockneten natürlichen Häuten bzw. Därmen gemäss Anspruch 1 oder 2, **dadurch gekennzeichnet, dass** es die folgenden Schritte aufweist:
a) Vorbereiten von Bändern (2, 6) aus natürlichen Häuten, ausgehend von Teilstücken frischer oder entsalzter, angefeuchteter Häute bzw. Därme mit irgendeinem Durchmesser, irgendeiner Qualität und irgendeiner Länge, die in Längsrichtung gespalten werden;
b) Anbringen einer ersten Schicht (5) aus einem oder mehreren ersten Bändern (2) auf einem geeigneten Träger (1), indem man die Bänder spiralförmig nacheinander auf dem Träger (1) derart aufwickelt, dass die ersten Bänder (2) auf ihrer Länge sich teilweise selbst überlappen und an ihren jeweiligen Enden einander gegenseitig überlappen;
c) Anbringen einer zweiten Schicht (10) aus zweiten Bändern (6) auf der ersten Schicht (5), indem man die zweiten Bänder (6) in Längsrichtung derart auf die erste Schicht (5) legt, dass die zweiten Bänder (6) auf ihrer Länge und an ihren jeweiligen Enden einander teilweise gegenseitig überlappen;
d) Trocknenlassen der beiden Schichten (5, 10) auf dem Träger (1); und
e) Abziehen der gewonnenen Hülle (9) von dem Träger (1).

4. Verfahren nach Anspruch 3, **dadurch gekennzeichnet, dass** man die zweiten Bänder (6) derart auflegt, dass sie einander schuppenartig überlappen und dass das hintere Ende (7) eines zweiten Bandes das vordere Ende (8) eines vorherigen zweiten Bandes teilweise überdeckt.
